# EUROPEAN PATENT SPECIFICATION

(11) **EP 1 328 933 B1**
(45) Date of publication and mention of the grant of the patent: **07.05.2008**
(21) Application number: 01983548.7
(22) Date of filing: 15.10.2001
(51) Int. Cl.: G11B 7/22, G02B 7/18, F16B 2/24

(54) **FASTENING ELEMENT**
BEFESTIGUNGSELEMENT
ELEMENT DE FIXATION

(30) Priority: 27.10.2000 DE 10053588
(43) Date of publication of application: 23.07.2003
(73) Proprietor: Thomson Licensing, 92100 Boulogne-Billancourt (FR)
(72) Inventor: WEISSER, Fritz, 78112 St. Georgen (DE)
(74) Representative: Kurth, Dieter
(86) International application number: PCT/EP2001/011869
(87) International publication number: WO 2002/035538

(56) References cited:
- US-A- 4 605 978
- US-A- 5 687 159
- PATENT ABSTRACTS OF JAPAN vol. 012, no. 233 (P-724), 5 July 1988 (1988-07-05) -& JP 63 025837 A (SHARP CORP), 3 February 1988 (1988-02-03)
- PATENT ABSTRACTS OF JAPAN vol. 1998, no. 02, 30 January 1998 (1998-01-30) -& JP 09 274123 A (ALPINE ELECTRON INC), 21 October 1997 (1997-10-21)
- PATENT ABSTRACTS OF JAPAN vol. 1995, no. 06, 31 July 1995 (1995-07-31) -& JP 07 063978 A (RICOH CO LTD), 10 March 1995 (1995-03-10)
- PATENT ABSTRACTS OF JAPAN vol. 008, no. 068 (P-264), 30 March 1984 (1984-03-30) -& JP 58 215739 A (HITACHI SEISAKUSHO KK), 15 December 1983 (1983-12-15)
- PATENT ABSTRACTS OF JAPAN vol. 017, no. 428 (P-1588), 9 August 1993 (1993-08-09) -& JP 05 088064 A (RICOH CO LTD), 9 April 1993 (1993-04-09)

## Description

The invention relates to a fastening element for adjusting a component in a unit, a position for fixing the fastening element being provided, and a plurality of stop surfaces for the component which are oriented in different directions in space being formed, in the body of the unit.

It is often necessary in practice for certain components of a unit to be positioned very precisely in the unit body, with the result that they assume a defined position relative to other components of the unit. An example which may be mentioned here is the arrangement of optical components, e.g. beam splitters, mirrors and lenses, in the beam path of optical units, for example units for recording or reproducing information on optical recording media.

In optical pickups which are used in CD and DVD players, a beam splitter, for example, is arranged such that it allows the laser beam emitted by a laser diode to pass through, with the result that said laser beam can come into contact with an optical data carrier and be reflected there. Moreover, the beam splitter is also intended to be arranged such that the beam coming back from the data carrier is reflected and thus guided to a detector. For positioning and fixing the beam splitter, in the case of known optical pickups, use is made of a clamping device which usually has at least one spring for each direction in space. The component is pressed, via the springs of the clamping device, onto the stop surfaces for the component which are formed in the unit body. Since such clamping devices are made up of a number of parts, the installation of the beam splitter, in conjunction with the assembly of the clamping device, involves very high outlay. Moreover, when use is made of clamping devices with a plurality of springs which are independent from one another, it frequently proves problematic to keep the component in its desired position permanently, i.e. throughout the service life of the unit. It is also known from the prior art to fix the beam splitter in the unit body with the aid of adhesive. However, permanently reliable fixing cannot be achieved in this case either.

A fastening element formed in two pieces and comprising three springs which are oriented in different directions and which press a composite prism against a reference surface in an optical pickup for recording or reproducing information on optical recording media is already known from JP 63 025837 A.

The object of the present invention, then, is to specify a possible fastening means which can be used to position components precisely, in a straightforward and permanent manner, in the body of a unit, to be precise relative to the stop surfaces for the component which are formed in the unit body.

This object is achieved by features specified in independent claims. Advantageous configurations are specified in dependent claims.

The fastening element is characterized by a plurality of retaining sections which are oriented in different directions in space and via which the component is pressed against the stop surfaces if the fastening element is fixed in the envisaged position in the body of the unit, at least one of the retaining sections being connected resiliently to the rest of the fastening element.

Taking the prior art as the departure point, it has been found first of all that springs are basically suitable for positioning and fixing certain components in the body of a unit if corresponding stop surfaces for the component are formed in the unit body. It has also been found that it is not absolutely necessary to have a plurality of springs for pressing a component onto the corresponding stop surfaces in the unit body, to be precise even when the stop surfaces are oriented differently in space. This is because it has been found, according to the invention, that it is also possible for a component to be pressed against differently oriented stop surfaces by a single fastening element designed as a spring element if the three-dimensional formation of the fastening element is adapted to the geometry of the component and the orientation of the stop surfaces. The fastening element according to the invention thus comprises a plurality of retaining sections which are oriented in different directions in space - corresponding to the stop surfaces - and of which at least one acts like a spring element. Using retaining sections advantageously achieves the situation where optical subassemblies are fastened without their optical action being impaired.

The use of a single fastening element for positioning and fixing a component in the body of a unit results in a considerable simplification in installation. It also proves advantageous that this type of fixing is very permanent, with the result that it is possible to assume a precise position of the component in the unit body despite mechanical and thermal loading throughout the service life of the unit.

As far as straightforward and cost-effective production is concerned, it proves advantageous if the fastening element according to the invention is formed in one piece. For this purpose, it is produced by bending, for example, from a suitable spring steel.

As has already been mentioned, a position for fixing the fastening element according to the invention has to be provided in the body of the unit in which the component is to be adjusted. It proves advantageous in this context if the fastening element has an installation section via which it is secured in the unit body. The geometry of the installation section will usually be reflected in the design of the unit body by the formation, for example, of abutment edges for the installation section, such edges additionally simplifying the installation of the fastening element.

In an advantageous variant of the fastening element according to the invention, all the retaining sections are connected resiliently to the installation section. This results in the component being fixed uniformly in all directions in space. Moreover, in this case, precise positioning of the component is ensured even in the case of production-related dimensional tolerances of the fastening element and, if appropriate, also of the component. It is possible to compensate for such dimensional tolerances in all directions in space by the retaining sections, which are connected resiliently to the installation section.

In terms of a straightforward installation of the fastening element together with the component, it is advantageous if a lead-through for a screw is formed in the installation section, with the result that the fastening element can be screwed tight in the unit body. With corresponding orientation of the installation section and of the retaining sections of the fastening element, it is possible, as the fastening element is screwed in, for the component to be moved into its desired position in the unit body and pressed against the stop surfaces.

There are various possible ways, in principle, of advantageously configuring and developing the teaching of the present invention. For this purpose, you are referred, on the one hand, to the claims subordinate to Patent Claim 1 and, on the other hand, to the following explanation of an exemplary embodiment of the invention with reference to the drawings, in which:
- Figure 1: shows the arrangement of a beam splitter in an optical pickup with the aid of a fastening element according to the invention,
- Figure 2: shows an enlarged detail from Figure 1 with the beam splitter and the fastening element, and
- Figure 3: shows, on its own, the fastening element illustrated in Figures 1 and 2.

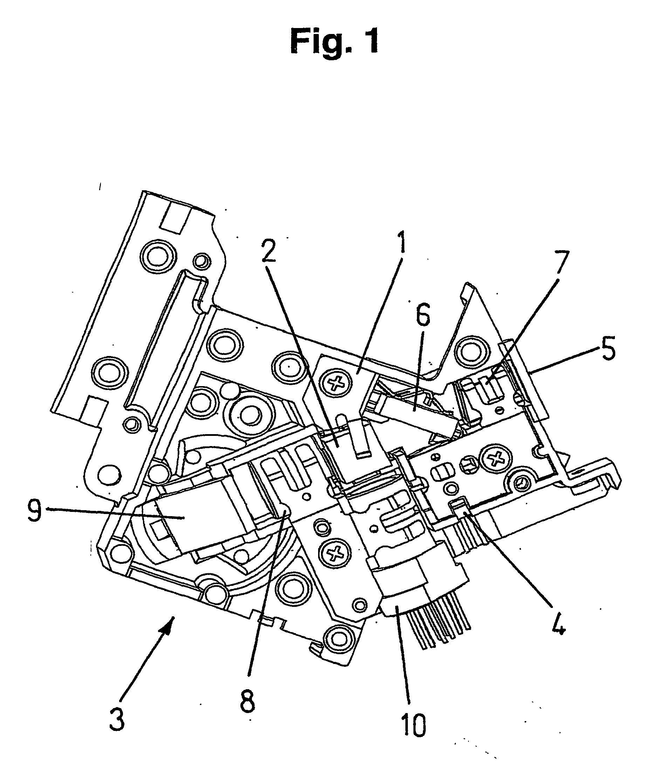

Figure 1 illustrates the use of a fastening element 1 according to the invention for adjusting an optical component, namely a beam splitter 2, in the beam path of a pickup 3 in a unit for recording or reproducing information on optical recording media.

The pickup 3 illustrated here is a DVD pickup, which may be operated both in DVD mode and in CD mode. In DVD mode, use is made of a laser diode 4 and a detector 5. The laser beam emitted by the laser diode 4 is reflected on a semireflective mirror 6 and passes through the beam splitter 2. The latter also serves for reflecting the beam coming back from the disk and deflecting it to the detector 5. In this case, the beam passes through the semireflective mirror 6 and is focused with the aid of a lens 7. 8 designates a collimator and 9 designates a mirror which is likewise arranged in the beam path of the pickup 3. In CD mode, use is made of a hologram 10.

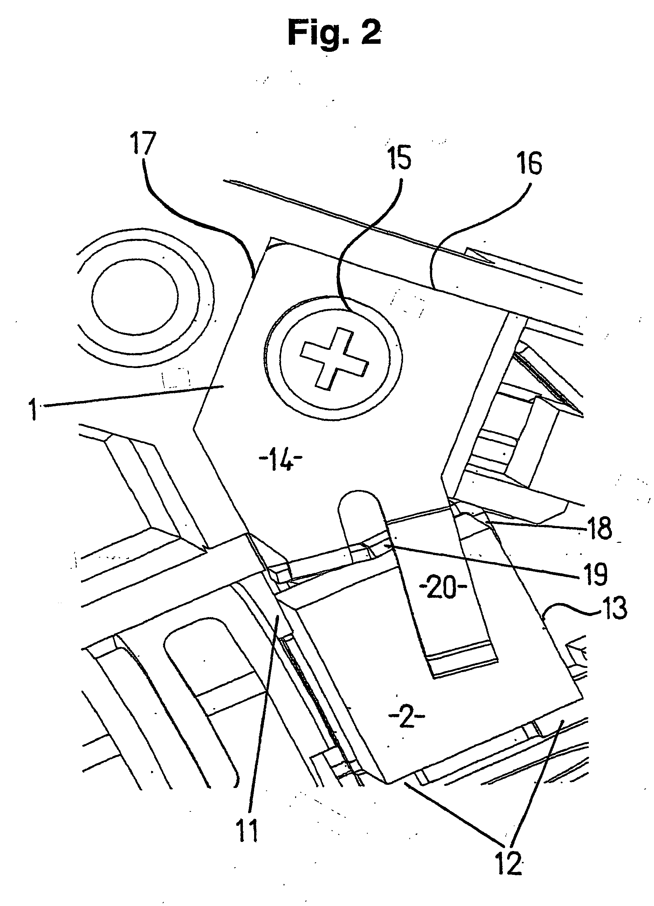

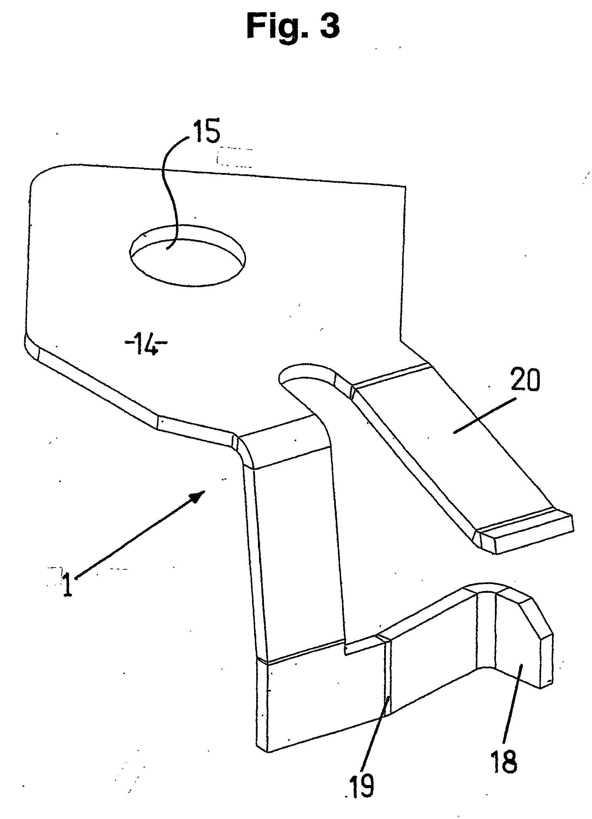

Figure 2 illustrates the functioning of the fastening element 1 according to the invention, while Figure 3 represents the design thereof.

For the functioning of the fastening element 1 according to the invention, it is necessary on the one hand for a position for fixing the fastening element 1 to be provided, and on the other hand for a plurality of stop surfaces for the beam splitter 2 which are oriented in different directions in space, and are designated 11 and 12 here, to be formed, in the body of the optical pickup 3.

In the exemplary embodiment illustrated here, the fastening element 1 is fixed on the optics body 13 of the optical pickup 3. For this purpose, the fastening element 1 has an installation section 14 with a screw lead-through 15. The position of the installation section 14 on the optics body 13 is defined, correspondingly, by a screw hole and two additional abutment edges 16 and 17 in the optics body 13. With the aid of the abutment edges 16 and 17, the installation section 14, and thus the entire fastening element 1, is aligned in a defined manner as the fastening element is screwed tight.

In the exemplary embodiment illustrated here, the fastening element 1 comprises three retaining sections 18, 19 and 20 which are oriented in different directions in space. These retaining sections 18, 19 and 20 are connected resiliently to the installation section 14.

In accordance with the cuboidal shape of the beam splitter 2 which is to be positioned and fixed and with the orientation of stop surfaces 11 and 12, the retaining sections 18 and 19 are formed at right angles to one another, with the result that they engage around a corner edge of the beam splitter 2. The spring forces of the retaining sections 18 and 19 press the beam splitter 2 against the stop surfaces 11 and 12. The retaining section 20 exerts a spring force essentially perpendicularly to the spring forces of the retaining sections 18 and 19 and presses the beam splitter 2 against the optics body 13 in this way.

The precise alignment, i.e. the adjustment, of the beam splitter 2 takes place during the installation of the fastening element 1, and more specifically as the latter is screwed tight. For this purpose, the beam splitter 2 is first of all arranged between the retaining sections 18, 19 and 20 of the fastening element 1. As the fastening element 1 is screwed tight, the beam splitter is then automatically moved, and pressed, against the stop surfaces 11 and 12 by the retaining sections 18 and 19. Finally, the beam splitter 2 is also pressed against the optics body 13 by the retaining section 20, with the result that the beam splitter 2 is fixed permanently, and aligned precisely, in all three directions in space.

Figure 3 shows that, in the exemplary embodiment illustrated here, the fastening element 1 is formed in one piece.

## Claims

1. Fastening element (1) for adjusting a component (2) in a unit (3), said unit comprising
- a position for fixing the fastening element (1), and
- a plurality of stop surfaces (11, 12) for the component (2) which are oriented in different directions in space,
**characterized in that** the fastening element (1) is formed in one piece with three retaining sections (18, 19, 20) which are oriented in different directions in space and via which the component (2) is pressed against the stop surfaces (11, 12) if the fastening element (1) is fixed in the envisaged position in the body of the unit (3), at least one of the retaining sections (18, 19, 20) being connected resiliently to the rest of the fastening element (1).

2. Fastening element (1) according to Claim 1, **characterized by** an installation section (14) via which the fastening element (1) is fixed in the body of the unit (3).

3. Fastening element (1) according to Claim 2, **characterized in that** the retaining sections (18, 19, 20) are connected resiliently to the installation section (14).

4. Fastening element (1) according to either of Claims 2 and 3, **characterized in that** a lead-through (15) is formed in the installation section (14), with the result that the fastening element (1) can be fixed in the envisaged position in the body of the unit (3) with the aid of a screw.

5. optical pickup (3) with a fastening element (1) for adjusting an optical component (2) according to one of Claims 1 to 4.

6. Unit for recording or reproducing information on optical recording media, having a pickup (3), **characterized in that** an optical component (2) is fixed in the beam path of the pickup (3) according to claim 5.

7. Unit according to Claim 6, **characterized in that** the fastening element (1) is configured in one piece and, for fixing the optical component (2) in three directions, has resilient retaining sections (18, 19, 20) which extend from an installation surface (14), aligned on at least one abutment surface in the pickup, of the fastening element (1) for fastening the fastening element (1) in the pickup (3).

8. Unit according to Claim 7, **characterized in that** two of the resilient retaining sections (18, 19, 20) extend perpendicularly one after the other in each case from the installation surface (14) of the fastening element (1).

9. Use of a fastening element (1) according to one of Claims 1 to 4 for adjusting an optical component, in particular a beam splitter (2), in the beam path of an optical pickup (3).

## Patentansprüche

1. Befestigungselement (1) zum Justieren eines Bauteils (2) in einer Baugruppe (3), wobei die Baugruppe Folgendes umfasst:
- eine Stellung zum Fixieren des Befestigungselements (1) und
- eine Vielzahl von Anschlagflächen (11, 12) für das Bauteil (2), die in unterschiedlichen Richtungen im Raum ausgerichtet sind,
**dadurch gekennzeichnet, dass** das Befestigungselement (1) einstückig mit drei Halteabschnitten (18, 19, 20) ausgebildet ist, die in unterschiedlichen Richtungen im Raum ausgerichtet sind und über die das Bauteil (2) gegen die Anschlagflächen (11, 12) gedrückt wird, wenn das Befestigungselement (1) in der vorgegebenen Stellung in dem Gehäuse der Baugruppe (3) fixiert ist, wobei mindestens einer der Halteabschnitte (18, 19, 20) federnd mit dem restlichen Befestigungselement (1) verbunden ist.

2. Befestigungselement (1) nach Anspruch 1, **gekennzeichnet durch** einen Einbauabschnitt (14), über den das Befestigungselement (1) in dem Gehäuse der Baugruppe (3) fixiert ist.

3. Befestigungselement (1) nach Anspruch 2, **dadurch gekennzeichnet, dass** die Halteabschnitte (18, 19, 20) federnd mit dem Einbauabschnitt (14) verbunden sind.

4. Befestigungselement (1) nach jedem der Ansprüche 2 und 3, **dadurch gekennzeichnet, dass** eine Durchführung (15) in dem Einbauabschnitt (14) ausgebildet ist, so dass das Befestigungselement (1) mit Hilfe einer Schraube in der vorgegebenen Stellung in dem Gehäuse der Baugruppe (3) fixiert werden kann.

5. Optische Aufnahmeeinrichtung (3) mit einem Befestigungselement (1) zum Justieren eines optischen Bauteils (2) nach einem der Ansprüche 1 bis 4.

6. Baugruppe zum Aufzeichnen oder Wiedergeben von Informationen auf optischen Aufzeichnungsmedien, welche eine Aufnahmeeinrichtung (3) umfasst, **dadurch gekennzeichnet, dass** ein optisches Bauteil (2) in dem Strahlengang der Aufnahmeeinrichtung (3) nach Anspruch 5 fixiert ist.

7. Baugruppe nach Anspruch 6, **dadurch gekennzeichnet, dass** das Befestigungselement (1) einstückig ausgestaltet ist und zum Fixieren des optischen Bauteils (2) in drei Richtungen federnde Halteabschnitte (18, 19, 20) umfasst, welche sich zum Befestigen des Befestigungselements (1) in der Aufnahmeeinrichtung (3) von einer auf mindestens einer Auflagefläche in der Aufnahmeeinrichtung ausgerichteten Einbaufläche (14) des Befestigungselements (1) erstrecken.

8. Baugruppe nach Anspruch 7, **dadurch gekennzeichnet, dass** sich zwei der federnden Halteabschnitte (18, 19, 20) jeweils nacheinander senkrecht von der Einbaufläche (14) des Befestigungselements (1) erstrecken.

9. Verwendung eines Befestigungselements (1) nach einem der Ansprüche 1 bis 4 zum Justieren eines optischen Bauteils, insbesondere eines Strahlenteilers (2), im Strahlengang einer optischen Aufnahmeeinrichtung (3).

## Revendications

1. Elément de fixation (1) permettant d'ajuster un composant (2) dans une unité (3), ladite unité comportant :
- une position permettant de fixer l'élément de fixation (1), et
- une pluralité de surfaces de blocage (11, 12) du composant qui sont orientées dans différentes directions dans l'espace,
**caractérisé en ce que** l'élément de fixation (1) est formé d'une seule pièce et comporte trois parties de retenue (18, 19, 20) qui sont orientées dans différentes directions dans l'espace et par l'intermédiaire desquelles le composant (2) s'appuie contre les surfaces de blocage (11, 12) si l'élément de fixation (1) est fixé dans la position prévue dans le cops de l'unité (3) , au moins une des parties de blocage (18, 19, 20) étant reliée de façon élastique au reste de l'élément de fixation (1).

2. Elément de fixation (1) selon la revendication 1, **caractérisé par** une partie de montage (14) par l'intermédiaire de laquelle l'élément de fixation est fixé dans le corps de l'unité (3).

3. Elément de fixation (1) selon la revendication 2, **caractérisé en ce que** les parties de retenue (18,19 20) sont reliées de façon élastique à la partie de montage (14).

4. Elément de fixation (1) selon l'une des revendications 2 et 3, **caractérisé en ce qu'**un passage traversant (15) est formé dans la partie de montage (14), ce dont il résulte que l'élément de fixation (1) peut être fixé dans la position prévue dans le corps de l'unité (3) à l'aide d'une vis.

5. Système de lecture optique comportant un élément de fixation (1) pur ajuster un composant optique (2) selon une des revendications 1 à 4.

6. Unité d'enregistrement ou de reproduction d'informations sur des supports d'enregistrement optiques, comportant un système de lecture (3), **caractérisée en ce qu'**un composant optique (2) est fixé dans le trajet de faisceau du système de lecture selon la revendication 5.

7. Unité selon la revendication 6, **caractérisée en ce que** l'élément de fixation (1) est formé d'une seule pièce et, pour fixer le composant optique (2) dans trois directions, qu'elle comporte des parties de retenue élastiques (18, 19, 20) qui s'étendent à partir de la surface de montage (14), alignées sur au moins une surface butoir du système de lecture, de l'élément de fixation (1) pour fixer l'élément de fixation (1) dans le système de lecture (3).

8. Unité selon la revendication 7, **caractérisée en ce que** deux des parties de retenue élastiques (18, 19, 20) s'étendent perpendiculairement l'une après l'autre dans chaque cas, à partir de la surface de montage (14) de l'élément de fixation (1).

9. Utilisation d'un élément de fixation (1) conforme à l'une des revendications 1 à 4 pour ajuster un composant optique, en particulier un séparateur de faisceau (2), dans le trajet du faisceau d'un système de lecture optique (3).
